# EUROPEAN PATENT APPLICATION

(11) **EP 4 759 986 A1**
(43) Date of publication of application: **17.06.2026**
(21) Application number: 24894337.5
(22) Date of filing: 11.09.2024
(51) Int. Cl.: D06F 58/22, B01D 35/02, B01D 35/34, B01D 39/06

(54) **CLOTHES DRYER COMPRISING FILTER ASSEMBLY**

(30) Priority: 24.11.2023 KR 20230165662
(71) Applicant: Samsung Electronics Co., Ltd., Suwon-si, Gyeonggi-do 16677 (KR)
(72) Inventor: KIM, Woojin, Suwon-si Gyeonggi-do 16677 (KR); KANG, Heejin, Suwon-si Gyeonggi-do 16677 (KR); KIM, Hooijoong, Suwon-si Gyeonggi-do 16677 (KR); PARK, Junhong, Suwon-si Gyeonggi-do 16677 (KR); SEO, Eungryeol, Suwon-si Gyeonggi-do 16677 (KR); YOO, Kyungmok, Suwon-si Gyeonggi-do 16677 (KR); JUNG, Minseok, Suwon-si Gyeonggi-do 16677 (KR)
(74) Representative: Walaski, Jan Filip
(86) International application number: PCT/KR2024/013813
(87) International publication number: WO 2025/110441

(57) **Abstract**

The present disclosure relates to a clothes dryer. To this end, the clothes dryer comprises: a main body comprising a drum arranged therein, and a front panel in which a first opening for injecting an object to be dried into the drum is formed; a heat exchanger which is arranged in a base of the main body and through which air discharged from the drum passes to exchange heat; a discharge duct which guides the air discharged from the drum into the base; and a filter assembly of a polyhedral shape having a width, a thickness, and a height, which is formed to filter the air discharged from the drum and passing through the heat exchanger. The width can be greater than the diameter of an opening forming the first opening arranged in the front panel, and the thickness may be greater than the transverse width of a discharge port that is located at the starting point of the discharge duct.

## Description

### [Technical Field]

Various embodiments of the disclosure relate to a filter provided in a clothing dryer, and more particularly, to a clothing dryer including a filter assembly provided to decrease the flow path resistance of dry air flowing inside.

### [Background Art]

A clothing dryer is a home appliance that serves to dry wet laundry with hot and dry air.

Clothing dryers may be classified into gas dryers and electric dryers depending on the power source, and may be divided into vented dryers and condenser dryers depending on how to treat the moisture sucked from laundry. The vented dryer vents the humid air flowing in from the drum to the outside through an exhaust duct extending long, and the condenser dryer dries the humid air coming from the drum through a heat exchanger and sends the dry air back to the drum. Air circulating inside the clothing dryer through such a series of processes may be referred to as circulating air.

In response to performing the drying process by the dryer, the circulating air may pass through the rotating drum, and the circulating air may dry laundry (also referred to as an object to be dried) put into the drum. In this process, foreign substances such as dust or lint present in the object to be dried may flow together with the dry air.

The filter assembly provided on the path from the outlet of the drum to the heat exchanger may collect foreign substances flowing together with the dry air. When foreign substances accumulate above a threshold level in the filter assembly, air may not flow smoothly.

Further, the flow of the circulating air may not be smooth due to the structure of the circulating flow path, which is a flow path through which the circulating air discharged from the drum moves, or the structure of a filter provided on the path. In other words, the flow path resistance that interferes with the movement of the circulating air may increase.

### [Disclosure]

### [Technical Problem]

According to various embodiments of the disclosure, there may be proposed a filter assembly that minimizes flow path resistance by maximizing the cross-sectional area of the flow path of the filter assembly through which dry air passes.

### [Technical Solution]

A clothing dryer according to an embodiment of the disclosure may include a main body with a drum inside the main body and with a front panel that has a first opening to the drum through which the first opening an object to be dried is placeable into the drum; a heat exchanger on a base of the main body, and through which heat exchanger air discharged from the drum passes to exchange heat with the heat exchanger; an outlet duct to guide the air discharged from the drum to the base; and a filter assembly having a shape of a polyhedron having a width, a length, a height and one openside, and configured so that the air, which is discharged from the drum and which passes through the heat exchanger, is filtered by the filter assembly, wherein the width may be longer than a diameter of the first opening in the front panel, and the length may be longer than a horizontal length of an outlet positioned at a start point of the outlet duct.

A top side of the filter assembly may be open, and the filter assembly may further include mesh members respectively along sides of the filter assembly, other than the top side of the filter assembly, so that the sides include surfaces which are formed by the mesh members.

A front surface of the filter assembly may be inclined at a first angle with respect to a lower surface of the filter assembly, and an upper portion of the front surface may be inclined to be adjacent to the front panel as compared to a lower portion of the front surface.

A rear surface of the filter assembly may be inclined at a second angle with respect to a lower surface of the filter assembly, and a lower portion of the rear surface may be inclined to be adjacent to the front panel as compared to an upper portion of the rear surface.

The first angle and second angle may be 90° to 180°.

The front panel may include a second opening through which the filter assembly may be movable and a cover configured to open and close the second opening.

A width of the second opening may be larger than or equal to the width of the filter assembly, and a height of the second opening may be larger than or equal to the height of the filter assembly.

The clothing dryer may further include: a sealing member between the second opening and the cover, which may correspond to a circumference of the second opening, and may be configured to seal the second opening in response to closing of the cover.

A guide rail may be on one side of the filter assembly, and a base cover may be on the base, and the base cover may include a guide plate which supports the guide rail when the filter assembly is on the base.

The guide rail may be on the guide plate.

The filter assembly may include: a first filter including a first mesh member, and a second filter including a second mesh member, the second filter may be coupled to an inside of the first filter, and a grid size of the first mesh member may be smaller than a grid size of a second mesh member.

The filter assembly may include a third filter including a third mesh member, and the third filter may be coupled to an inside of the second filter, and the grid size of the second mesh member may be smaller than a grid size of the third mesh member.

The grid size of the first mesh member may be 200Mesh to 250Mesh, the grid size of the second mesh member may be 150Mesh to 200Mesh, and the grid size of the third mesh member may be 110Mesh to 150Mesh.

The clothing dryer may further include a circulation fan on the base, and the circulation fan may be positioned on an inlet duct through which the air, that has exchanged heat with the heat exchanger, passes before being introduced into the drum.

A filter assembly of a clothing dryer according to an embodiment of the disclosure may have a polyhedron shape having a width, a length, a height, and an open side; and the filter assembly may include mesh members respectively along sides of the filter assembly other than the open side of the filter assembly so that the sides include surfaces which are formed by the mesh members, wherein the filter assembly may be configured to guide air discharged from the drum toward a heat exchanger in a base of the clothing dryer, and the width may be longer than a diameter of an opening in a front panel of the clothing dryer through which an object to be dried, and the length may be longer than a horizontal length of an outlet positioned at start point of an outlet duct.

The open side may be configured to face a direction that air flows into the filter assembly when the filter assembly is placed between the outlet duct and the heat exchanger.

At least one of a top side and a front side of the filter assembly may be open.

The filter assembly may further include: a first filter including a first mesh member; and a second filter including a second mesh member, wherein the second filter may be coupled to an inside of the first filter, and a grid size of a first mesh member may be smaller than a grid size of a second mesh member.

The filter assembly may further include a third filter including a third mesh member, and the third filter may be coupled to an inside of the second filter, and the grid size of the second mesh member may be smaller than a grid size of the third mesh member.

The grid size of the first mesh member may be 200Mesh to 250Mesh, the grid size of the second mesh member may be 150Mesh to 200Mesh, and the grid size of the third mesh member may be 110Mesh to 150Mesh.

### [Advantageous Effects]

The clothing dryer according to an embodiment of the disclosure may provide enhanced drying performance by minimizing flow path resistance generated when dry air flows.

It is possible to increase use convenience by increasing the amount of foreign substances collectable by the filter assembly included in the clothing dryer according to an embodiment of the disclosure.

It is possible to provide ease of filter cleaning by providing an attachment/detachment function of the filter assembly included in the clothing dryer according to an embodiment of the disclosure.

### [Description of Drawings]

FIG. 1 is a front perspective view illustrating a clothing dryer according to an embodiment of the disclosure;
FIG. 2 is a cross-sectional view illustrating a configuration of a clothing dryer according to an embodiment of the disclosure;
FIG. 3 is a view illustrating a heat cycle generated in a clothing dryer according to an embodiment of the disclosure;
FIG. 4 is a cross-sectional view illustrating a partial configuration at a point where a filter assembly is provided in a clothing dryer according to an embodiment of the disclosure;
FIG. 5 is a front view illustrating a clothing dryer according to an embodiment of the disclosure;
FIG. 6 is an exploded perspective view illustrating main components of a clothing dryer according to an embodiment of the disclosure;
FIG. 7A is a perspective view illustrating a filter assembly according to an embodiment of the disclosure;
FIG. 7B is a plan view illustrating a filter assembly according to an embodiment of the disclosure;
FIG. 7C is a right side view illustrating a filter assembly according to an embodiment of the disclosure;
FIG. 8 is an exploded perspective view illustrating a filter assembly according to an embodiment of the disclosure; and
FIG. 9 is a cross-sectional view illustrating a structure in which a filter assembly is coupled to a base according to an embodiment of the disclosure.

In connection with the description of the drawings, the same or similar reference numerals may be used to denote the same or similar elements.

### [Mode for Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

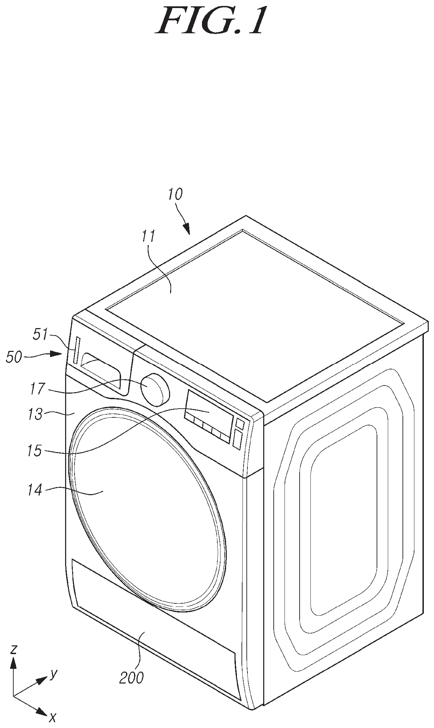

Hereinafter, for convenience of description, "x-axis direction", "y-axis direction", and "z-axis direction" are defined. The "x-axis direction" may be defined as a right direction when the clothing dryer (e.g., the clothing dryer 1 of FIG. 1) is viewed from the front direction. In other words, the "x-axis direction" may be understood as a left-right direction of the clothing dryer 1. The "y-axis direction" may be defined as a front to rear direction when the clothing dryer 1 is viewed in the front direction. In other words, the "y-axis direction" may be understood as a front-rear direction of the clothing dryer 1. The "z-axis direction" may be defined as a height direction of the clothing dryer 1. In other words, the "z-axis direction" may be understood as an upper-lower direction of the clothing dryer 1. However, the shape and position of the component are not limited by the defined directions.

FIG. 1 is a front perspective view illustrating a clothing dryer 1 according to an embodiment.

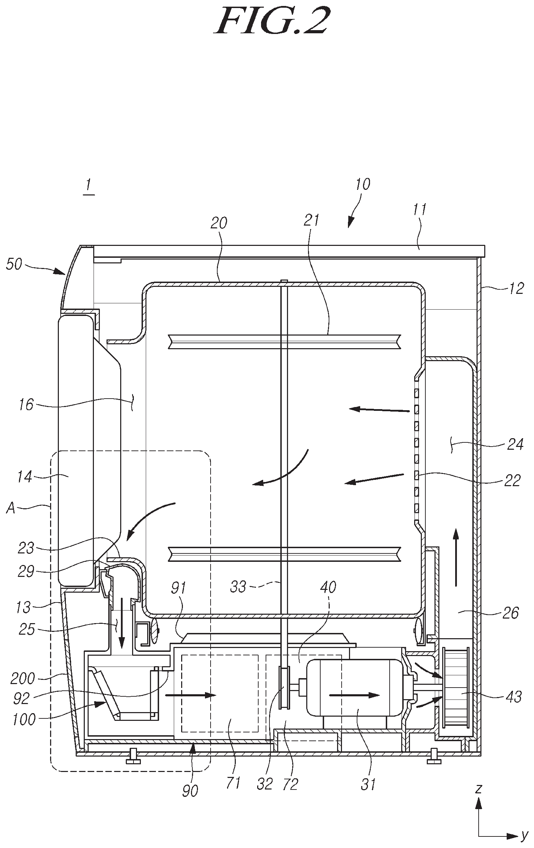

FIG. 2 is a cross-sectional view illustrating a configuration of a clothing dryer 1 according to an embodiment of the disclosure. In other words, it may be understood that FIG. 2 is a cross-sectional view taken in parallel with the y-z plane at one point in FIG. 1.

Referring to FIGS. 1 and 2, a clothing dryer 1 may include a main body 10 and a drum 20 installed inside the main body 10. The main body 10 may include a frame 12, a top cover 11 covering an upper portion of the frame 12, and a front panel 13 disposed on a front side of the frame 12.

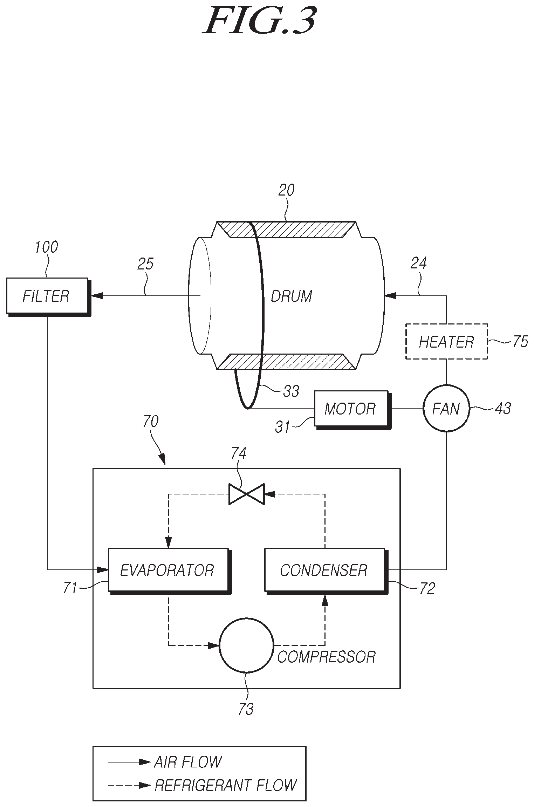

According to an embodiment, the base 90 may be mounted under the main body 10. An evaporator 71, a condenser 72, a compressor (e.g., the compressor 73 of FIG. 3), and an expansion valve (e.g., the expansion valve 74 of FIG. 3) constituting a refrigerant cycle may be seated on the base 90, and a circulation fan 43 and a driving motor 31 may be provided. A base cover 92 may be coupled to an upper portion of the base 90 to cover the evaporator 71 and the condenser 72.

According to an embodiment, a door 14 for opening and closing the drum 20 may be provided on the front side of the main body 10. An opening 16 may be formed in the front panel 13 to put the object to be dried into the drum 20, and a door 14 may be installed in front of the opening 16. The opening 16 provided in the front panel 13 may be referred to as a first opening. The door 14 may be hinged to one side of the opening 16 to be rotatable. For example, a structure protruding in the y-axis direction may be provided on the rear surface of the door 14 to prevent the object to be dried and/or the wash liquid from escaping out through the opening 16 in response to the door 14 being closed. The structure may have a shape corresponding to, e.g., the shape of the opening 16. A sealing member for sealing the opening 16 may be provided along the outer circumference of the structure.

According to an embodiment, the opening 16 may be implemented as an opening formed in the front side of the main body 10. The opening 16 may have a substantially circular or elliptical shape, for example. For example, when the opening 16 has a substantially elliptical shape, the opening 16 may have a predetermined width in the x-axis direction. The maximum width of the predetermined width may be smaller than the maximum width of the drum 20 in the x-axis direction.

According to an embodiment, a water container 50 for recovery may be provided on the front panel 13. The water container 50 for recovery may store condensate moved from a water tray (not shown) provided in the base 90. Condensate in the water tray may be moved to the water container 50 for recovery by a drain pump (not shown) provided in the water tray.

According to an embodiment, a handle portion grippable by the user may be provided on the front side of the water container 50 for recovery. Further, a display window 51 may be provided on the front side of the water container 50 for recovery. The display window 51 may be implemented as a transparent material so that the user may determine the amount of condensate collected inside the water container 50 for recovery. The user may check the display window 51 and withdraw the water container 50 for recovery as necessary to drain the condensate contained in the water container 50 for recovery.

According to an embodiment, the front panel 13 may be provided with a rotation switch 17 and a display unit 15 for controlling the clothing dryer 1. The rotation switch 17 may be provided to be rotated by the user's grip and select a mode of the clothing dryer 1. The display unit 15 may display the operation state of the clothing dryer 1 and the manipulation state of the user.

According to an embodiment, the drum 20 for receiving the object to be dried may be rotatably installed inside the main body 10. A plurality of lifters 21 are disposed inside the drum 20 along the circumferential direction of the drum 20. The lifter 21 may be installed to effectively dry the object to be dried by raising and dropping the object to be dried.

According to an embodiment, the drum 20 may be rotated by a belt 33 coupled to the outside of the drum 20. The driving motor 31 may be positioned on one side of the drum, and the driving motor 31 may be provided with a pulley 32 that is rotated by receiving a rotational force of the driving motor 31. The belt 33 may connect the pulley 32 and the drum 20 to transfer power of the driving motor 31 to the drum 20.

According to an embodiment, the drum 20 may include an inlet 22 and an outlet 23 to allow air to circulate. The inlet 22 may be positioned on the rear surface of the drum 20, and the outlet 23 may be positioned on the front side of the drum 20. Air sucked from the rear through the inlet 22 may dry the object to be dried and exit forward through the outlet 23.

According to an embodiment, the clothing dryer 1 may include a heat pump 70 (e.g., the heat pump 70 of FIG. 3) for drying air passing through the drum 20. The heat pump may be installed inside the main body 10. The heat pump 70 may include an evaporator 71, a condenser 72, a compressor 73, and an expansion valve 74. The evaporator 71 and the condenser 72 may be referred to as heat exchangers 71 and 72.

According to an embodiment, the clothing dryer 1 may include a circulation fan 43 installed on the movement path of air so that the drum 20 and the drying unit communicate with each other to circulate air. The circulation fan 43 may be installed inside the main body 10 and may be installed on the lower rear surface of the drum 20. The air may move along the ducts 24 and 25 so that the air flowed by the circulation fan 43 is not discharged to the outside. The circulation fan 43 may be driven together by the driving motor 31 driving the drum 20.

According to an embodiment, the duct provided in the path through which air introduced into the drum 20 passes may be referred to as an inlet duct 24, and the duct provided in the path through which air exiting the drum 20 passes may be referred to as an outlet duct 25. The inlet duct 24 may be disposed behind the drum 20 and may communicate with the inside of the drum 20 through the inlet 22 formed in the drum 20. The outlet duct 25 may be disposed in front of the drum 20 to guide discharge of hot and humid air passing through the inside of the drum 20.

According to an embodiment, while the clothing dryer 1 performs a drying operation, a closed flow path may be formed inside the main body 10. Here, the closed flow path may be understood as a movement path (see arrow in FIG. 2) of air formed to circulate air inside the drum 20 through the heat pump 70 and the drum 20. The closed flow path may form a flow path so that air outside the main body 10 does not flow into the drum 20 or air inside the drum 20 does not flow out of the main body 10. In other words, the flow of air may form a closed loop.

According to an embodiment, the air circulating inside the clothing dryer 1 may flow as follows. Air is discharged from the drum 20 through the outlet 23. The discharged air flows into the heat exchangers 71 and 72 along the outlet duct 25. The air dried after passing through the heat exchangers 71 and 72 may be guided to the inlet duct 24 along the guide duct 26. Here, the guide duct 26 may be understood as a closed path through which air moved by the circulation fan 43 reaches the inlet duct 24. The air may move along the inlet duct 24 and flow into the drum 20 through the inlet 22. Air may circulate through a series of processes and dry the object to be dried.

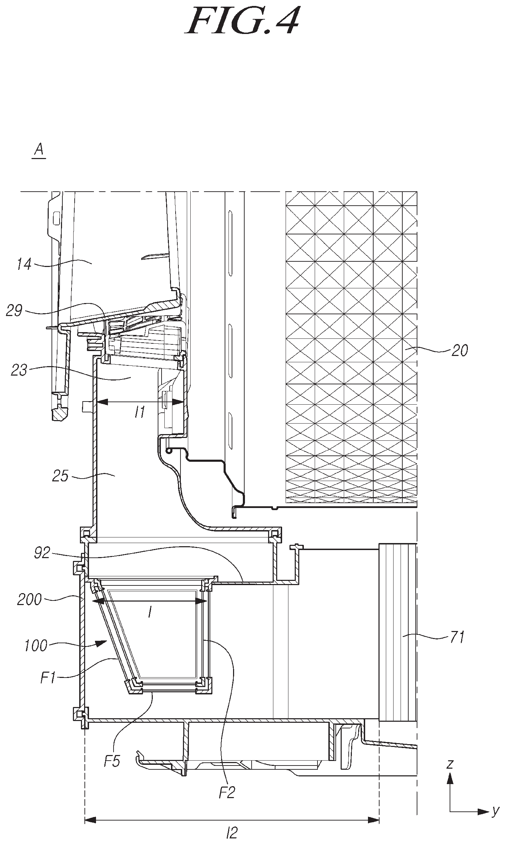

Although not shown, the clothing dryer 1 may further include a heater (e.g., the heater 75 of FIG. 4) to heat the air passing through the heat exchangers 71 and 72. By providing the heater 75 in the clothing dryer 1, the temperature of the dry air to be introduced into the drum 20 may be further increased. Accordingly, the clothing dryer 1 may enhance a drying function of the object to be dried or provide a sterilization function of the object to be dried. The clothing dryer 1 including the heater 75 and the heat pump 70 may be referred to as a "hybrid drying device". The clothing dryer 1 to be described in the disclosure may be understood as any one of a "heat pump type drying device" including only the heat pump 70 or a "hybrid drying device" including the heat pump 70 and the heater 75. For example, the heater 75 may be disposed on the guide duct 26.

According to an embodiment, a foreign substance such as lint may be included in the air while the air passes through the object to be dried. Since the air is not discharged but circulates inside the clothing dryer 1, it is necessary to remove foreign substances. Accordingly, the clothing dryer 1 may include a filter assembly 100 for filtering air. The flow of circulating air is described with reference to FIG. 4.

According to an embodiment, the filter assembly 100 may have a shape of a polyhedron with one side open. For example, the filter assembly 100 may have a substantially hexahedral shape with the upper side open. Since one side of the filter assembly 100 is open, foreign substances flowing together with the air may be introduced into the open side and collected by a mesh member provided inside the filter assembly 100.

According to an embodiment, the filter assembly 100 having one side open may have a basket shape. For example, the outer surface of the basket-shaped filter assembly 100 except for the open side may be implemented in various shapes. For example, the filter assembly 100 may have a substantially cylindrical shape.

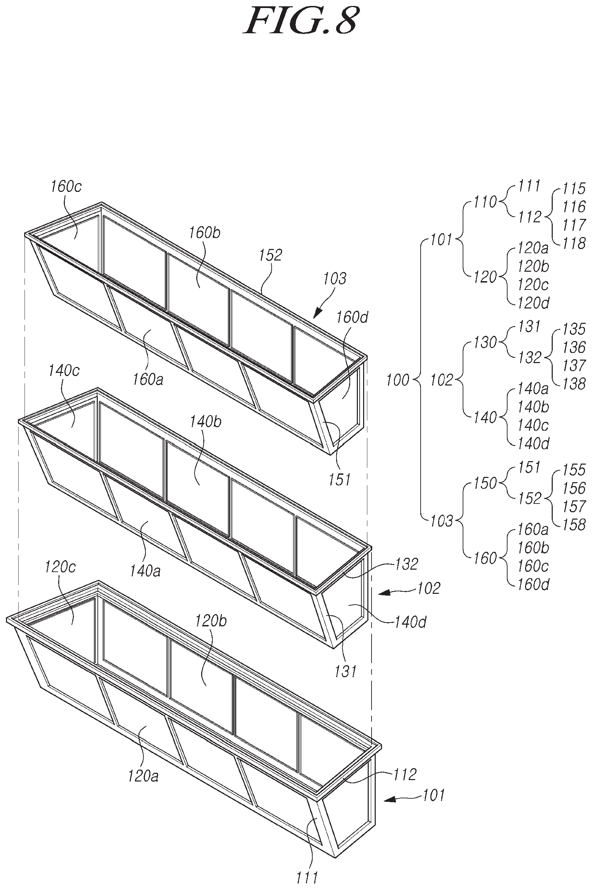

According to an embodiment, the filter assembly 100 may include a frame forming the exterior of the filter assembly 100 and a mesh member (e.g., the mesh members 120, 140, and 160 of FIG. 8) provided in a space formed by the frame. The mesh members 120, 140, and 160 may be provided on the outer surface of the filter assembly 100 except for the open side surface. For example, the mesh members 120, 140, and 160 may be provided on the front side, the rear surface, two opposite side surfaces (e.g., the left surface and the right surface) and the lower surface of the filter assembly 100.

According to an embodiment, the filter assembly 100 may include a plurality of filters (e.g., the first to third filters 101, 102, and 103 of FIG. 8) having different sizes. The plurality of filters 101, 102, and 103 may be coupled inward from the open side of the filter assembly 100. To that end, the outermost first filter (e.g., the first filter 101 of FIG. 8) may be relatively larger than the second filter (e.g., the second filter 102 of FIG. 8), and the second filter 102 may be relatively larger than the innermost third filter (e.g., the third filter 103 of FIG. 8). The mesh members 120, 140, and 160 provided in the plurality of filters may have a smaller grid size of the mesh member as they are positioned further outside. In other words, the filter positioned further outside among the plurality of filters 101, 102, and 103 constituting the filter assembly 100 may filter out finer foreign substances.

According to an embodiment, the filter assembly 100 may be provided to be detachable from the base 90. To that end, a filter door 200 that may be opened and closed may be provided on the front side of the main body 10.

According to an embodiment, the filter door 200 may be positioned on the front side of the main body 10 corresponding to the position where the filter assembly 100 is provided. A hinge may be provided on one side of the filter door 200. The hinge provided on one side of the filter door 200 may be fixed to one side of the front side of the main body 10 to allow the filter door 200 to be rotatable. For example, the filter door 200 may be installed to be rotatable with respect to any one of an upper end, a lower end, or two opposite side ends of the filter door 200. However, the disclosure is not limited thereto, and the filter door 200 may be provided to slide with respect to the front side of the main body 10. To that end, sliding members may be provided on upper and lower sides of the filter door 200, and a sliding guide member may be provided on a front side of the main body 10 to allow the sliding member to slide.

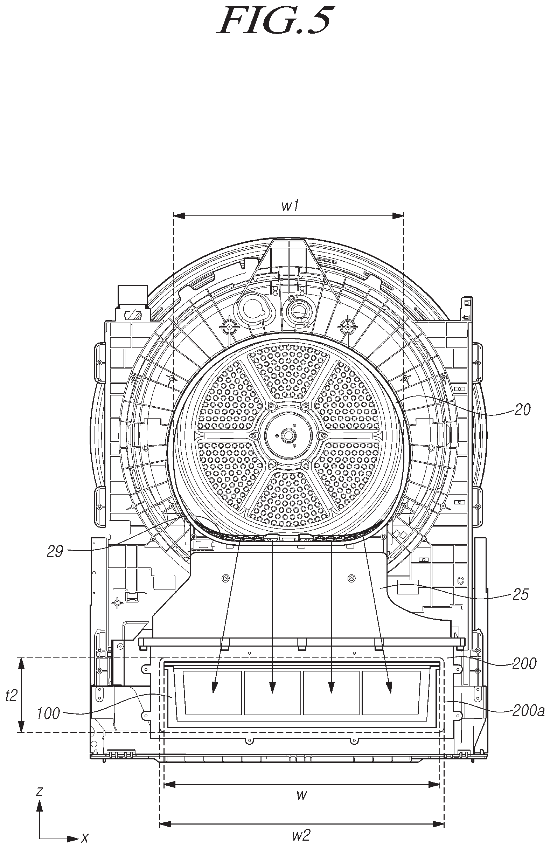

According to an embodiment, an opening (e.g., the second opening 200a of FIG. 5) having substantially the same size as the area of the filter door 200 may be provided on the front side corresponding to the filter door 200. The opening 200a may be referred to as a second opening 200a. The user may open the filter door 200 to pull out or put in the filter assembly 100 through the second opening 200a. The second opening 200a may have a predetermined width w2 in the x-axis direction and a predetermined height t2 in the z-axis direction. The width w2 of the second opening 200a may be referred to as a second width w2, and the height t2 of the second opening 200a may be referred to as a second height t2. The second width w2 and the second height t2 may have a predetermined relationship with the width w and the height t of the filter assembly 100. This is described with reference to FIG. 5.

According to an embodiment, a sealing member may be provided in the filter door 200 or the second opening 200a to seal the second opening 200a in response to the filter door 200 being closed. The sealing member may be provided, e.g., along an edge of the filter door 200 or along an outer circumferential surface of the second opening 200a. As the sealing member is provided, when the filter door 200 is closed, the second opening 200a may be sealed so that a material such as circulating air or foreign substances may not be discharged to the outside.

According to an embodiment, the direction in which the filter assembly 100 is to be installed may be determined by the moving direction of the air circulating inside the clothing dryer 1. In other words, in order to collect foreign substances contained in the air through the open side of the filter assembly 100, the direction in which the filter assembly 100 is to be installed may be determined. For example, to collect foreign substances contained in the air moving downward through the opening 16, the filter assembly 100 may be installed so that the open surface of the filter assembly 100 may be positioned on the upper side. For example, the filter assembly 100 may be installed so that the open surface of the filter assembly 100 is positioned on the front side to collect foreign substances contained in the air moving in the y-axis direction by the air reaching the lower side of the base 90 through the opening 16.

For example, the front surface of the filter assembly 100 may be disposed to be inclined at a predetermined angle from the front panel 13. In this case, the side surface of the filter assembly 100 may have a substantially trapezoidal shape. As the front surface of the filter assembly 100 is inclined at the predetermined angle, the area in which air discharged from the drum 20 touches the filter assembly 100 may be increased. Due to the structure of the filter assembly 100, flow path resistance generated when circulating air passes through the filter assembly 100 may be reduced.

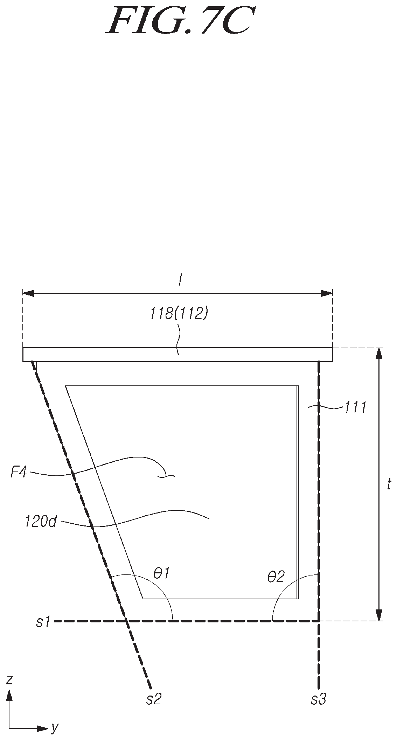

According to an embodiment, the filter assembly 100 may extend by a predetermined length in the x-axis direction. Hereinafter, the predetermined length by which the filter assembly 100 extends in the x-axis direction is referred to as a "width w of the filter assembly 100" (e.g., as shown in FIG. 5). The filter assembly 100 may extend by a predetermined length in the y-axis direction. Hereinafter, the predetermined length by which the filter assembly extends in the y-axis direction is referred to as a "length 1 of the filter assembly 100" (e.g., as shown in FIG. 7C). The filter assembly 100 may extend by a predetermined length in the z-axis direction. Hereinafter, the predetermined length by which the filter assembly 100 extends in the z-axis direction is referred to as a "height t of the filter assembly 100" (e.g., as shown in FIG. 7C).

According to an embodiment, the width w, the length 1, and the height t of the filter assembly 100 may be set within a predetermined range. The width w, length 1, and height t of the filter assembly 100 may be set considering the flow path resistance of the air passing through the filter assembly 100. The width w, the length 1, and the height t of the filter assembly 100 may be set from the viewpoint of minimizing the flow path resistance by maximizing the flow path area touched by air passing through the filter assembly 100. This is described below with reference to FIG. 3.

FIG. 3 is a view illustrating a heat cycle generated in a clothing dryer (e.g., the clothing dryer 1 of FIG. 1) according to an embodiment.

Referring to FIG. 3, it may be understood that the arrow denoted in solid line indicates a flow of air circulating inside the clothing dryer 1, and the arrow denoted in dashed line indicates a flow of a refrigerant circulating through the heat pump 70.

According to an embodiment, the humid air discharged from the drum 20 may pass through the filter assembly 100. The air may be discharged to the opening 16 provided in the front surface of the drum 20, and may reach the filter assembly 100 through the outlet duct 25 provided below the opening 16. Foreign substances flowing together with the air may be collected by the filter assembly 100.

According to an embodiment, the air passing through the filter assembly 100 may be introduced into the heat pump 70. Air may pass through the heat exchangers 71 and 72 included in the heat pump 70 while exchanging heat with the refrigerant circulating through the heat pump 70. The air discharged from the heat pump 70 may be understood as hot and dry air.

According to an embodiment, the heat pump 70 may include an evaporator 71 (e.g., the evaporator 71 of FIG. 2), a condenser 72 (e.g., the condenser 72 of FIG. 2), a compressor 73, and an expansion valve 74. At least one of the evaporator 71, the condenser 72, the compressor 73, and the expansion valve 74 included in the heat pump 70 may be omitted.

According to an embodiment, the refrigerant may circulate while undergoing a series of phase changes consisting of compression-condensation-expansion-evaporation. The condenser 72 and the evaporator 71 may be implemented as heat exchangers 71 and 72 capable of exchanging heat with air.

According to an embodiment, the compressor 73 compresses and discharges the refrigerant in a high-temperature and high-pressure state, and the discharged refrigerant flows into the condenser 72. The condenser 72 may condense the compressed refrigerant and emit heat to the surroundings through the condensation process. Further, the expansion device 74 expands the refrigerant in the high-temperature and high-pressure state condensed in the condenser 72 to a low-pressure state. The evaporator 71 may evaporate the expanded refrigerant and take away surrounding heat through the evaporation process.

According to an embodiment, the expansion device 74 may be implemented as an electronic expansion valve (EV, hereinafter referred to as an expansion valve). The expansion valve 74 may adjust the amount of refrigerant circulating by adjusting the opening degree through the electrical signal.

According to an embodiment, the air passing through the heat pump 70 may be introduced into the drum 20 through the inlet 24 provided in the rear surface of the drum 20 by a circulation fan 43. The air may be heated while passing through the heater 75. The heater 75 may be provided between the circulation fan 43 and the inlet duct (e.g., the inlet duct 24 of FIG. 2) provided behind the drum 20. The heater 75 may further heat dry air to be introduced into the drum 20 by the circulation fan 43. However, the disclosure is not limited thereto, and the clothing dryer 1 may not include the heater 75. In this case, the dry air may be introduced into the drum 20 through the inlet duct 24 by the circulation fan 43.

According to an embodiment, the circulation fan 43 may be rotated by the driving motor 31. The rotation shaft of the circulation fan 43 may be rotated by receiving power from the driving motor 31. The driving motor 31 may rotate the drum 20 by transferring power to a belt 33 (e.g., the belt 33 of FIG. 2) connected to the drum 20.

FIG. 4 is a cross-sectional view illustrating a partial configuration at a point where a filter assembly 100 is provided in a clothing dryer (e.g., the clothing dryer 1 of FIG. 1) according to an embodiment of the disclosure. In other words, FIG. 4 may be understood as an enlarged cross-sectional view of part A of FIG. 2.

FIG. 5 is a front view illustrating a clothing dryer 1 according to an embodiment of the disclosure.

FIGS. 4 and 5 may be understood as views illustrating components necessary to describe the width w and the length 1 of the filter assembly 100. Accordingly, some components may be omitted as necessary.

According to an embodiment, when the door 14 is closed, a closed flow path for discharging circulating air discharged from the drum 20 may be formed. For example, the closed flow path may include an outlet 23 and an outlet duct 25. The circulating air discharged from the drum 200 through the closed flow path may pass through the filter assembly 100 and flow into the heat exchangers 71 and 72 (e.g., the heat exchangers 71 and 72 of FIG. 2).

According to an embodiment, a grill member 29 may be provided at the inlet of the outlet 23. The grill member 29 may be provided to prevent an object to be dried present inside the drum 20 from passing to the outlet duct 25. The grill member 29 may include a frame portion constituting an edge and a grill portion in a grid shape disposed at predetermined intervals. The frame portion of the grill member 29 may correspond to the shape of the outlet 23 so as to be fixed to the outlet 23. The grill member 29 may be formed of a synthetic resin or a metal material.

According to an embodiment, the outlet 23 may have a predetermined width in the y-axis direction. The predetermined width may be changed as the outlet duct 25 extends in the lower direction (e.g., the -z-axis direction). For example, the width may be narrowed by a predetermined length as the outlet duct 25 extends downward, and then may be widened again at the point where the outlet duct 25 is connected to the base 90. Here, the width of the outlet 23 near where the grill member 29 is coupled is defined as 11.

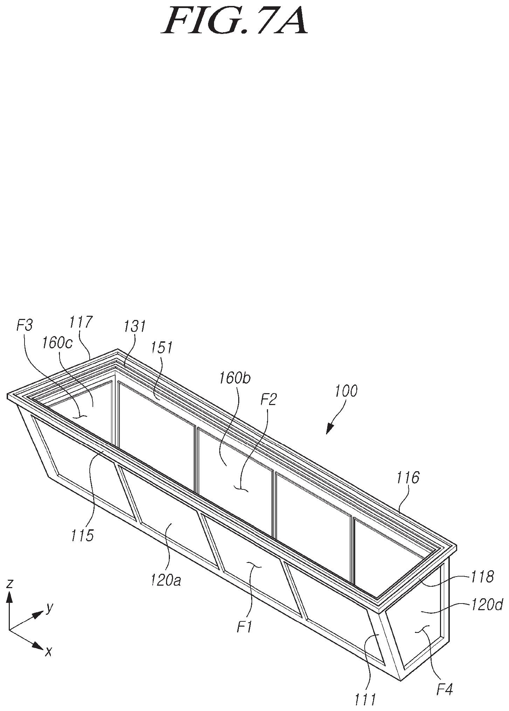

According to an embodiment, the filter assembly 100 may be provided on the base 90. A frame (e.g., the first frame 110 of FIG. 7A) forming the outer side of the filter assembly 100 may be placed on a portion of the base cover 91 covering the upper portion of the base 90. A portion of the base cover 91 on which the frame 110 is placed may be understood as a plate disposed substantially parallel to the x-y plane. A portion of the base cover 91 may be referred to as a guide plate member 92. The filter assembly 100 may be placed on the plate member 92, or the filter assembly 100 may be fixed on the base 90 in a manner that the frame 110 of the filter assembly 100 is coupled to the plate member 92.

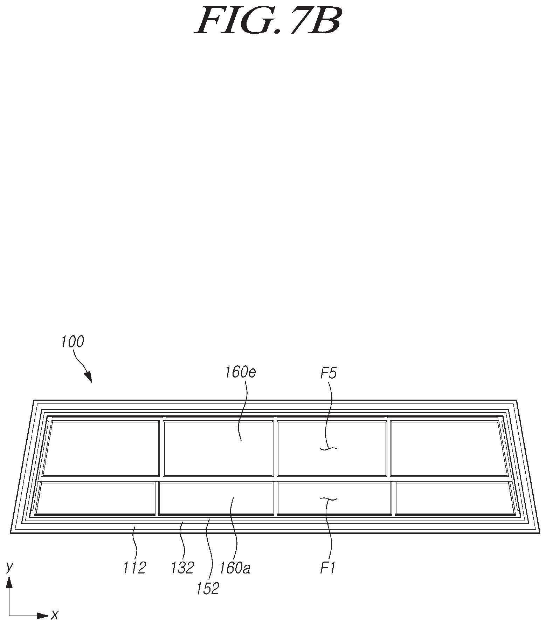

For example, when the frame 110 is coupled to the guide plate 92, one side (e.g., an upper frame positioned behind the upper frame 110) of the upper side (e.g., the upper frame 110 of FIG. 7) of the frame 110 may be coupled to the guide plate 92 in a press-fitting manner, or the one side may be disposed to be placed on the guide plate 92.

According to an embodiment, the circulating air introduced from the upper side of the filter assembly 100 may pass through the open upper surface of the filter assembly 100 and may pass through the front surface (e.g., the first surface F1 of FIG. 7A or 7B), the lower surface (e.g., the fifth surface F5 of FIG. 7A or 7B), the side surface (e.g., the left surface F3 and the right surface F4 of FIG. 7A or 7B), or the rear surface (e.g., the second surface F2 of FIG. 7A or 7B) of the filter assembly 100 to move to the base 90. The circulating air may pass through surfaces provided in the filter assembly 100 to move to the base 90, and foreign substances moving together with the circulating air may be collected inside the filter assembly 100. Since the filter assembly 100 has the shape of a polyhedron with one open surface, the cross-sectional area of the flow path in contact with the circulating air when passing through the filter assembly 100 may increase. Accordingly, the flow path resistance generated as the circulating air flows may be reduced.

According to an embodiment, the width w and the length 1 of the filter assembly 100 may be set to minimize flow path resistance. Here, the width w of the filter assembly 100 may be understood as the maximum length of the filter assembly 100 extending in the x-axis direction. For example, the width w may be understood as a horizontal length of a frame (e.g., the first upper frame 112 of FIG. 7) positioned on the filter assembly 100. The length 1 of the filter assembly 100 may be understood as the maximum length of the filter assembly 100 extending in the y-axis direction. For example, the length 1 may be understood as a vertical length of the first upper frame 112.

According to an embodiment, the length 1 of the filter assembly 100 may be set to be at least larger than or equal to the length 11 of the outlet duct 25 provided under the outlet 23 through which the circulating air is discharged. The length 11 of the outlet duct 25 may be referred to as a first length. By setting the length 1 of the filter assembly 100 to be larger than or equal to the first length 11, a predetermined area in which the circulating air discharged from the outlet duct 25 comes into contact with the filter assembly 100 may be secured.

According to an embodiment, the length 1 of the filter assembly 100 may be set to be at least less than or equal to the length 12 from the front surface of the main body 10 provided with the filter door 200 to the point where the evaporator 71 is provided. The length from the front surface to the point where the evaporator 71 is provided may be referred to as a second length 12. By setting the length 1 of the filter assembly 100 to be larger than or equal to the second length 12, the maximum length 1 of the filter assembly 100 may be secured without interference with the space in which the evaporator 71 is provided.

According to an embodiment, the width w of the filter assembly 100 may be at least larger than or equal to the width w1 of the opening 16 through which the circulating air is discharged from the drum 20. The width w1 of the opening 16 may be referred to as a first width w1. The first width w1 may be defined as a maximum radius that the opening 16 may have in the x-axis direction. By setting the width w of the filter assembly 100 to be larger than or equal to the first width w1, a predetermined area in which the circulating air discharged from the outlet duct 25 comes into contact with the filter assembly 100 may be secured.

According to an embodiment, the width w of the filter assembly 100 may be at least less than or equal to the second width w2 of the second opening 200a. The height t of the filter assembly 100 may be at least less than or equal to the second height t2 of the second opening 200a. As the width w of the filter assembly 100 is set to be less than or equal to the second width w2 and the height t of the filter assembly 100 is set to be less than or equal to the second height t2, the user may open the filter door 200 to easily pull out or pull in the filter assembly 100 through the second opening 200a. Accordingly, it is possible to provide the user with ease of detachment of the filter assembly 100, and to allow the user to easily remove foreign substances collected in the filter assembly 100.

According to an embodiment, the shape of the guide plate 92 for fixing the filter assembly 100 may be changed to correspond to the length l, width w, and/or height t of the filter assembly 100.

According to an embodiment, the guide plate 92 may be provided as the base cover 91 extends in the x-y plane direction. One side of the filter assembly 100 may be placed or fixed to one end of the guide plate 92.

According to an embodiment, the guide plate 92 may form a closed path through which air moving from the outlet duct 25 to the base 90 passes through the filter assembly 100 and reaches the base 90. In other words, the guide plate 92 may prevent circulating air from reaching the base 90 without passing through the filter assembly 100 from the outlet duct 25.

According to an embodiment, as the outlet duct 25, the guide plate 92, and the base 90 form a closed flow path, circulating air may move as follows. For example, the circulating air may pass through the outlet duct 25, and the filter assembly 100, and then flow into the heat exchangers 71 and 72 provided in the base 90. Circulating air may flow into the open side (upper side) of the filter assembly 100 and pass from the inside to the outside of the filter assembly 100. For example, the circulating air may pass from the inside of the filter assembly 100 in the direction of the front surface F1 or the rear surface F2, may pass in the direction of the side surface, or may pass in the direction of the lower surface F5 to be introduced into the heat exchangers 71 and 72.

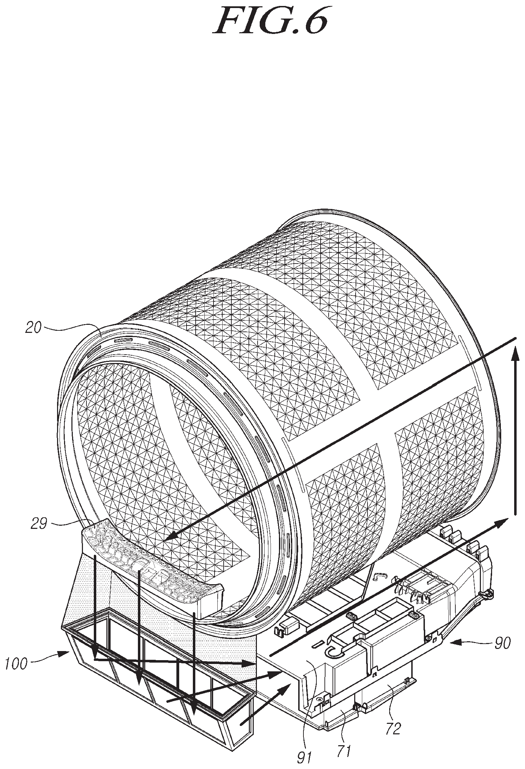

FIG. 6 is an exploded perspective view illustrating main components of a clothing dryer (e.g., the clothing dryer 1 of FIG. 1) according to an embodiment of the disclosure. FIG. 6 may be understood as an exploded perspective view illustrating a movement path of circulating air flowing through the clothing dryer 1. The arrow denoted with bold solid lines may be understood as schematically illustrating the movement path of circulating air.

In FIG. 6, some components (e.g., the inlet duct 24, the outlet duct 25, and the circulation fan 43) constituting the clothing dryer 1 may be omitted.

Referring to FIG. 6, the circulating air may be discharged from the drum 20 to move to the outlet 23 provided at the lower end of the inlet (or first opening) 16. A grill member 29 may be provided at the inlet of the outlet 23 to prevent the object to be dried from escaping off.

According to an embodiment, the circulating air introduced from the upper side of the outlet 23 may pass through the outlet duct 25 and the filter assembly 100 to enter the base 90. The outlet duct 25, the base 90, and the base cover 91 may form a closed flow path. The closed flow path may be referred to as an "discharge flow path". Accordingly, the circulating air may enter the base 90 from the outlet duct 25 through the filter assembly 100. The circulating air entering the base 90 may be heated and dried through the heat exchangers 71 and 72, and the circulating air may be introduced into the drum 20 by a circulation fan (e.g., the circulation fan 43 of FIG. 2) provided at a rear end of the base 90. The circulating air may be heated by a heater (e.g., the heater 75 of FIG. 3) before being introduced into the drum 20.

According to an embodiment, flow path resistance may be generated depending on the area of the cross-sectional area of the flow path through which the circulating air moves. The larger the flow path cross-sectional area is, the less the flow path resistance may be, and the narrower the flow path cross-sectional area is, the greater the flow path resistance may be. Here, the cross-sectional area of the flow path may be understood as a cross-sectional area of an area positioned in a direction substantially perpendicular to the direction in which the circulating air moves.

For example, the cross-sectional area of the flow path from the outlet duct 25 to the filter assembly 100 may be narrower than the cross-sectional area of the flow path of the filter assembly 100. Accordingly, the flow path resistance of the circulating air may be reduced in the filter assembly 100.

FIG. 7A is a perspective view illustrating a filter assembly 100 according to an embodiment of the disclosure.

FIG. 7B is a plan view illustrating a filter assembly 100 according to an embodiment of the disclosure.

FIG. 7C is a right side view illustrating a filter assembly 100 according to an embodiment of the disclosure.

Referring to FIGS. 7A to 7C, at least a plurality of filters (e.g., the first filter 101, the second filter 102, and the third filter 103 of FIG. 8) may be sequentially coupled to form the filter assembly 100. The first to third filters 101, 102, and 103 may be coupled inwardly from the open surface of the filter assembly 100. Hereinafter, it will be assumed that the filter positioned on the outermost side of the filter assembly 100 is the first filter 101, and the filter positioned on the innermost side is the third filter 103. Accordingly, it may be understood that the exterior of the filter assembly 100 is determined by the first filter 101. Accordingly, the shape of the filter assembly 100 is described based on the first filter 101.

According to an embodiment, the filter assembly 100 may have a shape of a polyhedron with one open surface. For example, the filter assembly 100 may have a hexahedral shape with one open surface. For example, the filter assembly 100 may have a basket shape with one open surface. Through the open surface, circulating air may be introduced into the filter assembly 100 and pass to the outside of the mesh members 120, 140, and 160 provided on the fixed surfaces. Foreign substances moving together with circulating air may be collected in the filter assembly 100 by the mesh members 120, 140, and 160.

According to an embodiment, the filter assembly 100 may include a frame 110 forming the exterior and mesh members 120, 140, and 160 provided on an outer surface formed by the frame 110. The exterior formed by the filter assembly 100 may be determined by the shape of the frame 110.

According to an embodiment, the filter assembly 100 may have a substantially hexahedral shape by the frame 110. However, the disclosure is not limited thereto, and it may be implemented in various shapes having one open surface and a predetermined volume.

According to an embodiment, the filter assembly 100 may include a front surface F1, a rear surface F2, a left surface F3, a right surface F4, a lower surface F5, and an upper surface by the frame 110. The open surface of the filter assembly 100 may be understood as the upper surface.

According to an embodiment, the frame 110 may include a second frame 112 provided along an edge of the open surface and a first frame 111 connected to the second frame 112 to form the exterior of the filter assembly 100. The first frame 111 and the second frame 112 may integrally form the frame 110, or the first frame 111 and the second frame 110 may be coupled to form the frame 110. For example, when the first frame 111 and the second frame 112 integrally form the frame 110, the first frame 111 and the second frame 112 may be injection-molded integrally of a metal or plastic material. Alternatively, the first frame 111 and the second frame 112 may be injection-molded separately, and the first frame 111 and the second frame 112 may be coupled to form the frame 110.

According to an embodiment, the first frame 111 may substantially form the exterior of the filter assembly 100. The front surface F1, the rear surface F2, the left surface F3, the right surface F4, and the lower surface F5 of the filter assembly 100 may be formed by the exterior of the first frame 111. The mesh member 120 may be provided on the closed surface formed by the first frame 111. The mesh member 120 may be attached to an outer surface formed by the first frame 111. To support the mesh member 120, the first frame 111 may include a support frame extending in a predetermined direction (e.g., a height direction).

According to an embodiment, the mesh member 120 may include a first mesh member 120a attached to the front surface F1, a second mesh member 120b attached to the rear surface F2, a third mesh member 120c attached to the left surface F3, a fourth mesh member 120d attached to the right surface F4, and a fifth mesh member attached to the lower surface F5. The first mesh member to the fifth mesh members 120a, 120b, 120c, and 120d may have substantially the same material and grid size.

According to an embodiment, the mesh member 120 may be formed of fabric, metal, or synthetic resin. The mesh member 120 may collect foreign substances moving together with circulating air passing through the filter assembly 100 by having a predetermined grid size.

According to an embodiment, the unit of the size of the grid cell constituting the mesh member 120 may be represented as a Mesh. Mesh is a unit corresponding to the size of a particle that may pass through the grid cell constituting the mesh member 120, and when Mesh increases, it may mean that the size of the particle capable of passing through the grid cell decreases. For example, 4Mesh may mean that the number of grid cells included in an area having a size of 1 inch (or 25.4 millimeters (mm)) x 1 inch is 4². In other words, the maximum diameter of the particle that may pass through the mesh member of 4Mesh may be understood as 0.25 inches. For example, 100Mesh may mean that the number of grid cells included in the 1-inch x 1-inch area is 100². In other words, the maximum diameter of the particle that may pass through the mesh member of 100Mesh may be understood as 0.01 inches.

According to an embodiment, when the Mesh value of the mesh member 120 provided in the first filter 101 positioned on the outermost side of the filter assembly 100 is defined as N1, the Mesh value of the mesh member 160 provided in the third filter 103 positioned on the innermost side of the filter assembly 100 is defined as N3, and the Mesh value of the mesh member 140 provided in the second filter 102 positioned between the first filter 101 and the third filter 103 is defined as N2, N1 to N3 may have a relationship of N1≥N2≥N3. In other words, the filter positioned further outside may be understood as having a smaller grid size of the mesh member provided in the filter (or the grid cells are denser).

For example, the Mesh value N1 of the first mesh member 120 may be 200 to 250 Mesh. The mesh value N2 of the second mesh member 140 may be 150 to 200 Mesh. The Mesh value N3 of the third mesh member 160 may be 110 to 150 Mesh. However, the disclosure is not limited to the described ranges, and the ranges of the mesh values N1, N2, and N3 of the first mesh member to the third mesh member 120, 140, and 160 may be determined by the material forming the mesh member, and the mesh member of the filter positioned further outside may be provided to have a smaller grid size or to have denser grid cells.

According to an embodiment, the second frame 112 may provide coupling of the filter assembly 100 with the guide plate 92 which is at least a portion of the base cover 91. The second frame 112 may include, e.g., a second frame front end 115, a second frame rear end 116, a second frame left end 117, and a second frame right end 118.

For example, the second frame rear end 116 may be placed on the upper side of the guide plate 92.

For example, as the second frame rear end 116 and the guide plate 92 may be provided in shapes corresponding to each other, the second frame rear end 116 and the guide plate 92 may be hooked or fitted to each other.

According to an embodiment, at least one of the front surface F1 or the rear surface F2 of the filter assembly 100 may be disposed to be inclined with respect to the lower surface F5. Referring to FIG. 7C, an auxiliary line extending from the lower surface F5 may be referred to as s1, an auxiliary line extending from the front surface F1 may be referred to as s2, and an auxiliary line extending from the rear surface F2 may be referred to as s3. For example, the auxiliary line s1 may be disposed substantially parallel to the bottom surface (e.g., the lower surface of the base 90) of the clothing dryer 1.

According to an embodiment, the front surface F1 may be disposed to be inclined by a first angle θ1 with respect to the lower surface F5. The rear surface F2 may be disposed to be inclined by a second angle θ2 with respect to the lower surface F5. The first angle θ1 and the second angle θ2 may be set to, e.g., an obtuse angle larger than 90 degrees and less than 180 degrees. The front surface F1 and the rear surface F2 may be inclined in a direction in which the area of the open surface is narrowed in response to a decrease in height in the -z-axis direction. Accordingly, the cross-sectional area of the flow path of the circulating air flowing from the outlet duct 25 to the lower side of the filter assembly 100 may be maximized. Although not shown, the left surface F3 and the right surface F4 may also be inclined at a predetermined angle with respect to the lower surface F5.

FIG. 8 is an exploded perspective view illustrating a filter assembly 100 according to an embodiment of the disclosure. FIG. 8 may be understood as an exploded perspective view of a plurality of filters (e.g., the first filter 101, the second filter 102, and the third filter 103) constituting the filter assembly 100.

Referring to FIG. 8, the filter assembly 100 may be configured by combining the plurality of filters 101, 102, and 103. The plurality of filters 101, 102, and 103 may include, e.g., a first filter 101, a second filter 102, and a third filter 103. However, the disclosure is not limited thereto, and the plurality of filters 101, 102, and 103 may further include extra filters as necessary. Further, the configuration and exterior included in the second filter 102 and the third filter 103 illustrated in FIG. 8 may be substantially similar to the first filter 101 except for the difference in size. Accordingly, the description of the first filter 101 in FIGS. 7A to 7C may also be applied to the second filter 102 and the third filter 103.

According to an embodiment, in the filter assembly 100, the first filter 101 may be positioned on the outermost side, the second filter 102 may be coupled to the inside of the first filter 101, and the third filter 103 may be coupled to the inside of the second filter 105. The second filter 102 may be coupled to the open surface of the first filter 101, and the third filter 103 may be coupled to the open surface of the second filter 102.

According to an embodiment, the second filter 102 may include a frame 130 constituting the exterior and a mesh member 140. The frame 130 may include a second frame 132 provided along an edge of the open surface and a first frame 131 connected to the second frame 132 to form the exterior of the second filter 102.

According to an embodiment, the first frame 131 may substantially form the exterior of the second filter 102. The front surface F1, the rear surface F2, the left surface F3, the right surface F4, and the lower surface F5 of the second filter 102 may be formed by the exterior of the first frame 131. The mesh member 140 may be provided on the closed surface formed by the first frame 131.

According to an embodiment, the mesh member 140 may include a first mesh member 140a attached to the front surface F1, a second mesh member 140b attached to the rear surface F2, a third mesh member 140c attached to the left surface F3, a fourth mesh member 140d attached to the right surface F4, and a fifth mesh member attached to the lower surface F5. The first mesh member to the fifth mesh members 140a, 140b, 140c, and 140d may have substantially the same material and grid size.

According to an embodiment, in the second frame 132, the second filter 102 may provide coupling of the first filter 101 with the second frame 112. The second frame 132 may include, e.g., a second frame front end 135, a second frame rear end 136, a second frame left end 137, and a second frame right end 138. A lower side of the second frame 132 of the second filter 102 may be placed on an upper side of an edge formed by the second frame 112 of the first filter 101.

According to an embodiment, the third filter 103 may include a frame 150 constituting the exterior and a mesh member 160. The frame 150 may include a second frame 152 provided along an edge of the open surface and a first frame 151 connected to the second frame 152 to form the exterior of the third filter 103.

According to an embodiment, the first frame 151 may substantially form the exterior of the third filter 103. The front surface F1, the rear surface F2, the left surface F3, the right surface F4, and the lower surface F5 of the second filter 102 may be formed by the exterior of the first frame 151. The mesh member 160 may be provided on the closed surface formed by the first frame 151.

According to an embodiment, the mesh member 160 may include a first mesh member 160a attached to the front surface F1, a second mesh member 160b attached to the rear surface F2, a third mesh member 160c attached to the left surface F3, a fourth mesh member 160d attached to the right surface F4, and a fifth mesh member 160e attached to the lower surface F5. The first to fifth mesh members 140a, 140b, 140c, 140d, and 160e may have substantially the same material and grid size.

According to an embodiment, in the second frame 152, the third filter 103 may provide coupling of the second filter 102 with the second frame 132. The second frame 152 may include, e.g., a second frame front end 155, a second frame rear end 156, a second frame left end 157, and a second frame right end 158. A lower side of the second frame 152 of the third filter 103 may be placed on an upper side of an edge formed by the second frame 132 of the second filter 102.

According to an embodiment, the first to third filters 101, 102, and 103 constituting the filter assembly 100 may be detachably provided. As the first to third filters 101, 102, and 103 are detachably provided, it is possible to provide the user with ease of cleaning the filter assembly 100.

According to an embodiment, the grid sizes of the mesh member 120 included in the first filter 101, the mesh member 140 included in the second filter 102, and the mesh member 160 included in the third filter 103 may be different from each other. Hereinafter, for convenience of description, the mesh member 120 included in the first filter 101 may be referred to as mesh member #1 120, the mesh member 140 included in the second filter 102 may be referred to as mesh member #2 140, and the mesh member 160 included in the third filter 103 may be referred to as mesh member #3 160.

According to an embodiment, the grid size constituting the outermost mesh member #1 120 may be the smallest, and the grid size constituting the innermost mesh member #3 160 may be the largest. In other words, the mesh member positioned further outside may collect finer foreign substances. Accordingly, the filter assembly 100 composed of the plurality of filters 101, 102, and 103 may sequentially collect foreign substances corresponding to the particles of the foreign substances. Further, due to the multilayer structure of the filter assembly 100, the filter assembly 100 may collect foreign substances having a relatively large particle size as well as foreign substances having a relatively fine particle size.

According to an embodiment, assuming that the grid size of the mesh member #1 120 is set to N1 Mesh, the grid size of the mesh member #2 140 is set to N2 Mesh, and the grid size of the mesh member #3 160 is set to N3 Mesh, N1 to N3 may have a relationship of N1≥N2≥N3.

For example, the mesh member #3 160 may have a grid size of 110Mesh, the mesh member #2 140 may have a grid size of 200Mesh, and the mesh member #1 120 may have a grid size of 200Mesh. However, the disclosure is not limited thereto, and the grid sizes of the mesh members 120, 140, and 160 may be set in a direction in which the mesh member positioned further outside have a denser grid size.

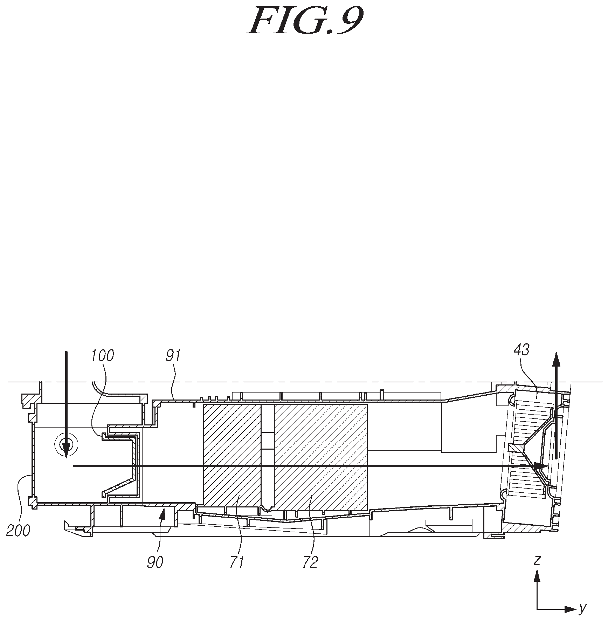

FIG. 9 is a cross-sectional view illustrating a structure in which a filter assembly 100 is coupled to a base 90 according to an embodiment of the disclosure. FIG. 9 may be understood as an extended embodiment in which the open surface of the filter assembly 100 is disposed in front of the base 90.

Referring to FIG. 9, the filter assembly 100 may be coupled to a recess formed by the base 90 and the base cover 91. The recess may correspond to, e.g., the exterior formed by a frame (e.g., the frame 110 of the first filter 101 of FIG. 7A) of the filter assembly 100.

According to an embodiment, the front portion of the depression may be inclined at a predetermined angle so that the filter assembly 100 may be stably placed in the recess. For example, the front portion of the recess may be inclined so that the upper side is positioned in the y-axis direction (e.g., the rear side) relative to the lower side.

According to an embodiment, as the filter assembly 100 is coupled to the recess, the flow path resistance of the circulating air flowing into the base 90 through the outlet duct 25 may be reduced. In other words, as no separate component is disposed on the path from the outlet duct 25 to the filter assembly 100, the cross-sectional area of the flow path of the circulating air may be relatively wide.

A clothing dryer 1 according to an embodiment of the disclosure may comprise a filter assembly 100 disposed on an outlet duct 25 formed so that dry air is discharged from a drum 20 and introduced into a heat exchanger 71 or 72 provided on a base 90. The filter assembly 100 may be detachably coupled to a housing of the base 90. The filter assembly 100 may have a shape of a polyhedron having a predetermined width w, a predetermined length l, and a predetermined height t and having one open surface. The predetermined width w may be relatively longer as compared with a diameter w1 of an opening forming an opening 16 provided in a front housing 13. The predetermined length l may be relatively longer than a horizontal length l1 of an outlet 23 provided at a start point of the inlet duct 24.

In the clothing dryer 1 according to an embodiment of the disclosure, a n upper surface of the filter assembly 100 may be open. A surface F1, F2, F3, F4, or F5 other than the upper surface may be closed by a mesh member 120, 140, or 160.

In the clothing dryer 1 according to an embodiment of the disclosure, a front surface F1 of the filter assembly 100 may be inclined at a predetermined angle θ1 with respect to a lower surface F5 of the filter assembly 100. In the clothing dryer 1 according to an embodiment of the disclosure, an upper side of the front surface F1 may be inclined to be adjacent to the front panel 13 as compared to a lower side of the front surface F1.

In the clothing dryer 1 according to an embodiment of the disclosure, a rear surface F2 of the filter assembly 100 may be inclined at a predetermined angle θ2 with respect to a lower surface F5 of the filter assembly 100. In the clothing dryer 1 according to an embodiment of the disclosure, a lower side of the rear surface F2 may be inclined to be adjacent to the front panel 13 as compared to an upper side of the rear surface F2.

In the clothing dryer 1 according to an embodiment of the disclosure, the predetermined angle θ1 or θ2 may be 90° to 180°.

In the clothing dryer 1 according to an embodiment of the disclosure, the front panel 13 may include an opening 200a and a cover member 200 capable of opening and closing the opening 200a.

In the clothing dryer 1 according to an embodiment of the disclosure, a width w2 of the opening 200a may be relatively larger than or equal to the width w of the filter assembly. A height t2 of the opening 200a may be relatively larger than or equal to the height t of the filter assembly.

In the clothing dryer 1 according to an embodiment of the disclosure, the cover member 200 may include a sealing member provided inside. The sealing member may be provided to correspond to a circumference of the opening 200a and may be disposed to seal the opening in response to closing of the cover member 200.

In the clothing dryer 1 according to an embodiment of the disclosure, a guide rail may be provided on one side of the filter assembly 100. A base cover 91 disposed on the base 90 may include a guide plate 92 for supporting the guide rail when the filter assembly 100 is mounted.

In the clothing dryer 1 according to an embodiment of the disclosure, the guide rail may be disposed on the guide plate 92.

In the clothing dryer 1 according to an embodiment of the disclosure, the guide rail and the guide plate 92 may be engaged and fixed to each other.

In the clothing dryer 1 according to an embodiment of the disclosure, the guide rail and the guide plate 92 may be press-fitted to each other.

In the clothing dryer 1 according to an embodiment of the disclosure, the guide rail may include a hook. The guide plate 92 may include a hole at a point corresponding to the hook. The guide rail and the guide plate 92 may be hooked to each other.

In the clothing dryer 1 according to an embodiment of the disclosure, the filter assembly 100 may include a first filter 101 and a second filter 102. The second filter 102 may be coupled to an inside of the first filter 101. A grid size of a first mesh member 120 included in the first filter 101 may be relatively smaller than a grid size of a second mesh member 140 included in a second filter 102.

In the clothing dryer 1 according to an embodiment of the disclosure, the grid size of the first mesh member 120 may be 200Mesh to 250Mesh. The grid size of the second mesh member 140 may be 150Mesh to 200Mesh.

In the clothing dryer 1 according to an embodiment of the disclosure, the filter assembly 100 may include a third filter 103 coupled to an inside of the second filter 102. The grid size of the second mesh member 140 may be relatively smaller than a grid size of the third mesh member 160 included in the third filter 103.

In the clothing dryer 1 according to an embodiment of the disclosure, the grid size of the third mesh member 160 may be 110Mesh to 150Mesh.

The clothing dryer 1 according to an embodiment of the disclosure may further comprise a circulation fan 43 provided on the base 90. The circulation fan 43 may be positioned on an inlet duct 24 through which the dry air passes through the heat exchanger 71 or 72 and is introduced into the drum 20.

A filter assembly 100 may be included in a clothing dryer 1 and have a predetermined width w, a predetermined length l, and a predetermined height t. The filter assembly 100 may be provided in an outlet duct 25 extending from an outlet 23 of a drum 20 toward a heat exchanger 71 or 72. A surface F1, F2, F3, F4, or F5 other than an open surface may be closed by a mesh member 120, 140, or 160. The predetermined width w may be relatively longer than a diameter w1 of an opening 16, and the predetermined length 1 may be relatively longer than a length 11 of the outlet 23.

In the filter assembly 100 according to an embodiment of the disclosure, the open surface may be determined considering a direction of dry air flowing into the filter assembly 100.

In the filter assembly 100 according to an embodiment of the disclosure, any one of an upper surface or a front surface of the filter assembly 100 may be open.

The filter assembly 100 according to an embodiment of the disclosure may further comprise a first filter 101 and a second filter 102. The second filter 102 may be coupled to an inside of the first filter 101. A grid size of a first mesh member 120 included in the first filter 101 may be relatively smaller than a grid size of a second mesh member 140 included in a second filter 102.

In the filter assembly 100 according to an embodiment of the disclosure, the grid size of the first mesh member 120 may be 200Mesh to 250Mesh. The grid size of the second mesh member 140 may be 150Mesh to 200Mesh.

In the filter assembly 100 according to an embodiment of the disclosure, the filter assembly 100 may include a third filter 103 coupled to an inside of the second filter 102. The grid size of the second mesh member 140 may be relatively smaller than a grid size of the third mesh member 160 included in the third filter 103.

In the filter assembly 100 according to an embodiment of the disclosure, the grid size of the third mesh member 160 may be 110Mesh to 150Mesh.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications, equivalents, and/or substitutes of various embodiments.

## Claims

1. A clothing dryer (1) comprising:
a main body (10) with a drum (20) inside the main body (10) and with a front panel (13) that has a first opening (16) to the drum (20) through which the first opening (16) an object to be dried is placeable into the drum (20);
a heat exchanger (71, 72) on a base (90) of the main body (10), and through which heat exchanger (71, 72) air discharged from the drum (20) passes to exchange heat with the heat exchanger (71, 72);
an outlet duct (25) to guide the air discharged from the drum (20) to the base (90); and
a filter assembly (100), having a shape of a polyhedron having a width, a length, and a height, and one open side, and configured so that the air, which is discharged from the drum (20) and which passes through the heat exchanger (71, 72), is filtered by the filter assembly (100),
wherein the width is longer than a diameter of the first opening (16) in the front panel (13), and
the length is longer than a horizontal length of the outlet (23) positioned at a start point of the outlet duct (25).

2. The clothing dryer (1) of claim 1, wherein
a top side of the filter assembly (100) is open, and
the filter assembly (100) further includes mesh members (120, 140, 160) respectively along sides of the filter assembly (100), other than the top side of the filter assembly (100), so that the sides include surfaces which are formed by the mesh members (120, 140, 160).

3. The clothing dryer (1) of claim 2, wherein
a front surface (F1) of the filter assembly (100) is inclined at a first angle (θ1) with respect to a lower surface (F5) of the filter assembly (100), and
an upper portion of the front surface (F1) is inclined to be adjacent to the front panel (13) as compared to a lower portion of the front surface (F1).

4. The clothing dryer (1) of any one of claim 1 to 3, wherein
a rear surface (F2) of the filter assembly (100) is inclined at a second angle (θ2) with respect to a lower surface (F5) of the filter assembly (100), and
a lower portion of the rear surface (F2) is inclined to be adjacent to the front panel (13) as compared to an upper portion of the rear surface (F2).

5. The clothing dryer (1) of claim 3 or 4, wherein the first angle and second angle (θ1, θ2) are 90° to 180°.

6. The clothing dryer (1) of claim 1, wherein the front panel (13) includes a second opening (200a) through which the filter assembly (100) is movable and a cover (200) configured to open and close the second opening (200a).

7. The clothing dryer (1) of claim 6, wherein
a width (w2) of the second opening (200a) is larger than or equal to the width (w) of the filter assembly (100), and
a height (t2) of the second opening (200a) is larger than or equal to the height (t) of the filter assembly (100).

8. The clothing dryer (1) of claim 6, further comprising:
a sealing member between the second opening (200a) and the cover (200), which corresponds to a circumference of the second opening (200a), and is configured to seal the second opening (200a) in response to closing of the cover.

9. The clothing dryer (1) of claim 1, wherein
a guide rail is on one side of the filter assembly (100), and
a base cover (91) is on the base (90), and the base cover (91) includes a guide plate (92) which supports the guide rail when the filter assembly (100) is on the base (90).

10. The clothing dryer (1) of claim 9, wherein the guide rail is on the guide plate (92).

11. The clothing dryer (1) of claim 1, wherein
the filter assembly (100) includes:
a first filter (101) including a first mesh member (120), and
a second filter (102) including a second mesh member (140),
the second filter (102) is coupled to an inside of the first filter (101), and
a grid size of the first mesh member (120) is smaller than a grid size of a second mesh member (140).

12. The clothing dryer (1) of claim 11, wherein
the filter assembly (100) includes a third filter (103) including a third mesh member (160), and the third filter (103) is coupled to an inside of the second filter (102), and
the grid size of the second mesh member (140) is smaller than a grid size of the third mesh member (160).

13. The clothing dryer (1) of claim 12, wherein
the grid size of the first mesh member (120) is 200Mesh to 250Mesh,
the grid size of the second mesh member (140) is 150Mesh to 200Mesh, and
the grid size of the third mesh member (160) is 110Mesh to 150Mesh.

14. The clothing dryer (1) of claim 1, further comprising a circulation fan (43) on the base (90), and
wherein the circulation fan (43) is positioned on an inlet duct (42) through which the air, that has exchanged heat with the heat exchanger (71, 72), passes before being introduced into the drum (20).

15. A filter assembly (100) of a clothing dryer (1) having a width, a length, a height, and an open side; and the filter assembly (100) comprising:
mesh members (120, 140, 160) respectively along sides of the filter assembly (100) other than the open side of the filter assembly (100) so that the sides include surfaces which are formed by the mesh members (120, 140, 160),
wherein the filter assembly (100) is configured to guide air discharged from a drum (20) of the clothing dryer (1) toward a heat exchanger (71, 72) in a base (90) of the clothing dryer (1), and
the width is longer than a diameter of an opening (16) in a front panel (13) of the clothing dryer (1) through which an object to be dried, and the length is longer than a horizontal length of an outlet (23) positioned at start point of an outlet duct (25).
